# EUROPEAN PATENT APPLICATION

(11) **EP 2 394 536 A1**
(43) Date of publication of application: **14.12.2011**
(21) Application number: 09839721.9
(22) Date of filing: 28.12.2009
(51) Int. Cl.: A47F 5/00, H04B 7/15

(54) **ELECTRONIC INVENTORY TAG TERMINAL, ELECTRONIC INVENTORY TAG SYSTEM, AND DISPLAY METHOD**

(30) Priority: 06.02.2009 JP 2009026511
(71) Applicant: Seiko Instruments Inc., Chiba-shi Chiba 261-8507 (JP)
(72) Inventor: KONO, Shigeru, Chiba-shi Chiba 261-8507 (JP); MORI, Masayuki, Chiba-shi Chiba 261-8507 (JP); MORIYA, Koichi, Chiba-shi Chiba 261-8507 (JP)
(74) Representative: Cloughley, Peter Andrew
(86) International application number: PCT/JP2009/071817
(87) International publication number: WO 2010/089947

(57) **Abstract**

Provided is an electronic shelf label terminal, an electronic shelf label system, and a display method which facilitate a check for an installation place with good signal quality. An electronic shelf label terminal (1) is a terminal that displays display information received from a management server (3) via a relay device (2). A wireless communication unit of the electronic shelf label terminal (1) receives radio waves from a plurality of the relay devices (2). A display unit of the electronic shelf label terminal (1) displays information on the relay devices (2) accessible from the electronic shelf label terminal (1) for communication to the management server (3), based on field intensities of the radio waves received by the wireless communication unit.

## Description

### Technical Field

The present invention relates to an electronic shelf label terminal, an electronic shelf label system, and a display method.

### Background Art

In a retail store such as a supermarket, electronic shelf label terminals that display product names, prices, and the like are currently used for the purpose of, for example, reducing labor of replacing shelf labels to change the product names and product prices. Patent Literature 1 discloses a technology relating to an electronic shelf label system for managing the electronic shelf label terminals. In the conventional electronic shelf label system, a plurality of relay devices for relaying communication between the management server for managing the electronic shelf label terminals and the electronic shelf label terminals are installed in a store, and the respective electronic shelf label terminals are installed on shelves in accordance with products arranged in the shelves.

### Citation List

### Patent Literature

Patent Literature 1: JP 10-301494 A

### Summary of Invention

### Technical Problem

By the way, the relay device and the electronic shelf label terminal perform wireless communication therebetween, and hence the electronic shelf label terminal is required to be installed, also in consideration of reliability, in a place that allows communication to the plurality of relay devices. In the conventional case, however, a person in charge of installing the electronic shelf label terminal carries a dedicated device capable of checking the signal quality, and installs the electronic shelf label terminal while checking the signal quality in the installation place of the electronic shelf label terminal. Hence, the person in charge needs to carry and operate the dedicated device, which raises a problem in that the installation of the electronic shelf label terminal requires a large amount of labor and time.

The present invention has been made in view of the above-mentioned matter, and it is therefore an object thereof to provide an electronic shelf label terminal, an electronic shelf label system, and a display method which facilitate a check for an installation place with good signal quality.

### Solution to Problem

(1) The present invention has been made in order to solve the above-mentioned problem, and the present invention provides an electronic shelf label terminal that displays display information received from a management server via a relay device, including: a reception unit for receiving radio waves from a plurality of the relay devices; and a display unit for displaying information on the relay devices accessible from the electronic shelf label terminal for communication to the management server, based on field intensities of the radio waves received by the reception unit.

According to the present invention, the electronic shelf label terminal displays the information on the terminal-accessible relay devices, and hence the person in charge of installing the electronic shelf label terminal can easily check an installation place with good signal quality without using any dedicated device or the like. In other words, the person in charge only needs to carry the electronic shelf label terminal when installing the electronic shelf label terminal, and hence there is no need to carry the dedicated device or other devices.

(2) Further, according to the present invention, the above-mentioned electronic shelf label terminal further includes: a terminal access request transmitting unit for transmitting, to the relay device, a terminal access request for requesting access from the electronic shelf label terminal to the communication to be performed via the relay device to the management server; a terminal access response receiving unit for receiving, from the relay device, a terminal access response that is a response to the terminal access request; and a determination unit for determining terminal-accessible relay devices based on the terminal access response received by the terminal access response receiving unit, in which the display unit displays information on the terminal-accessible relay devices determined by the determination unit.

According to the present invention, the electronic shelf label terminal determines the terminal-accessible relay devices based on the terminal access response that is the response to the terminal access request transmitted to the relay device, and displays the information on the terminal-accessible relay devices. Hence, for example, even when the radio waves are received from a relay station and a base station other than the relay device for relaying the communication to the management server, the electronic shelf label terminal does not display those relay station and base station as the terminal-accessible relay devices. Thus, it is possible to display the information on the relay devices communicable to the terminal with higher accuracy.

(3) Further, according to the present invention, the above-mentioned electronic shelf label terminal further includes a calculation unit for calculating a number of the terminal-accessible relay devices determined by the determination unit, in which the display unit displays the number of the terminal-accessible relay devices calculated by the calculation unit.

According to the present invention, the electronic shelf label terminal displays the number of the terminal-accessible relay devices, and hence the person in charge can easily check an installation place which allows communication to a predetermined number (for example, two) of relay devices or more.

(4) Further, according to the present invention, in the above-mentioned electronic shelf label terminal, the reception unit receives identification information of the relay devices from the plurality of the relay devices, and the display unit displays the identification information received by the reception unit.

According to the present invention, the electronic shelf label terminal displays the identification information of the communicable relay devices, and hence the person in charge can grasp which relay device the electronic shelf label terminal is communicable to.

(5) Further, according to the present invention, the above-mentioned electronic shelf label terminal further includes a switching unit for switching a channel to be used for receiving the radio waves when the reception unit does not receive the radio waves from the relay devices for a predetermined period of time or more.

According to the present invention, the electronic shelf label terminal switches the channel to be used for receiving the radio waves, and hence there is no need to fix the channel of the electronic shelf label terminal in advance. Thus, for example, even when any particular channel is unavailable, the electronic shelf label terminal can perform communication to the relay device without resetting the channel.

(6) Further, according to the present invention, the above-mentioned electronic shelf label terminal further includes a storage unit for storing a list of the channels to be used for receiving the radio waves, in which the switching unit switches the channel to be used for receiving the radio waves by referring to the list stored in the storage unit.

It generally takes about several minutes to perform processing of receiving the radio waves with respect to all the channels, which requires a long period of time to display the information on the relay devices. According to the present invention, the electronic shelf label terminal switches the channel to be subjected to relay device search by using the list, and hence the electronic shelf label terminal can display the information on the relay devices in a relatively short period of time, avoiding searching all the channels.

(7) Further, the present invention provides an electronic shelf label system, including: a management server; and a plurality of electronic shelf label terminals that each display display information received from the management server via a relay device, in which each of the plurality of electronic shelf label terminals includes: a reception unit for receiving radio waves from a plurality of the relay devices; and a display unit for displaying information on the relay devices accessible from the each of the plurality of electronic shelf label terminals for communication to the management server, based on field intensities of the radio waves received by the reception unit.

(8) Further, the present invention provides a display method for an electronic shelf label system including: a management server; and a plurality of electronic shelf label terminals that each display display information received from the management server via a relay device, the display method includes the steps of: receiving, by each of the plurality of electronic shelf label terminals, radio waves from a plurality of the relay devices; and displaying, by the each of the plurality of electronic shelf label terminals, information on the relay devices accessible from the each of the plurality of electronic shelf label terminals for communication to the management server, based on field intensities of the received radio waves.

### Advantageous Effects of Invention

According to the present invention, the electronic shelf label terminal displays the information on the terminal-accessible relay devices, and hence the person in charge of installing the electronic shelf label terminal can easily check an installation place with good signal quality without using any dedicated device or the like.

### Brief Description of Drawings

[FIG. 1] A block diagram illustrating a configuration of an electronic shelf label system according to a first embodiment of the present invention.
[FIG. 2] A block diagram illustrating hardware configurations of an electronic shelf label terminal, a relay device, and a management server according to the embodiment of the present invention.
[FIG. 3] A block diagram illustrating a functional configuration of the electronic shelf label terminal according to the embodiment of the present invention.
[FIG. 4] A sequence diagram illustrating operations of data transmission/reception processing performed between the relay device and the electronic shelf label terminal according to the embodiment of the present invention.
[FIG. 5] A schematic diagram illustrating a structure and example of data in a search channel table stored in a storage medium of the electronic shelf label terminal according to the embodiment of the present invention.
[FIG. 6] A schematic diagram illustrating a structure and example of data in a terminal-accessible relay device list generated by a list generating unit of the electronic shelf label terminal according to the embodiment of the present invention.
[FIG. 7] A sequence diagram illustrating operations of terminal-accessible relay device display processing according to the embodiment of the present invention.
[FIG. 8] A flow chart illustrating procedures of the terminal-accessible relay device display processing performed by the electronic shelf label terminal according to the embodiment of the present invention.
[FIGS. 9] Display examples of information on the relay devices, which is displayed on a display unit of the electronic shelf label terminal according to the embodiment of the present invention.
[FIG. 10] A sequence diagram illustrating operations of terminal-accessible relay device display processing according to a second embodiment of the present invention.
[FIG. 11] A flow chart illustrating procedures of the terminal-accessible relay device display processing performed by the electronic shelf label terminal according to the embodiment of the present invention.

### Description of Embodiments

Hereinbelow, embodiments of the present invention are described in detail with reference to the drawings.

### [First embodiment]

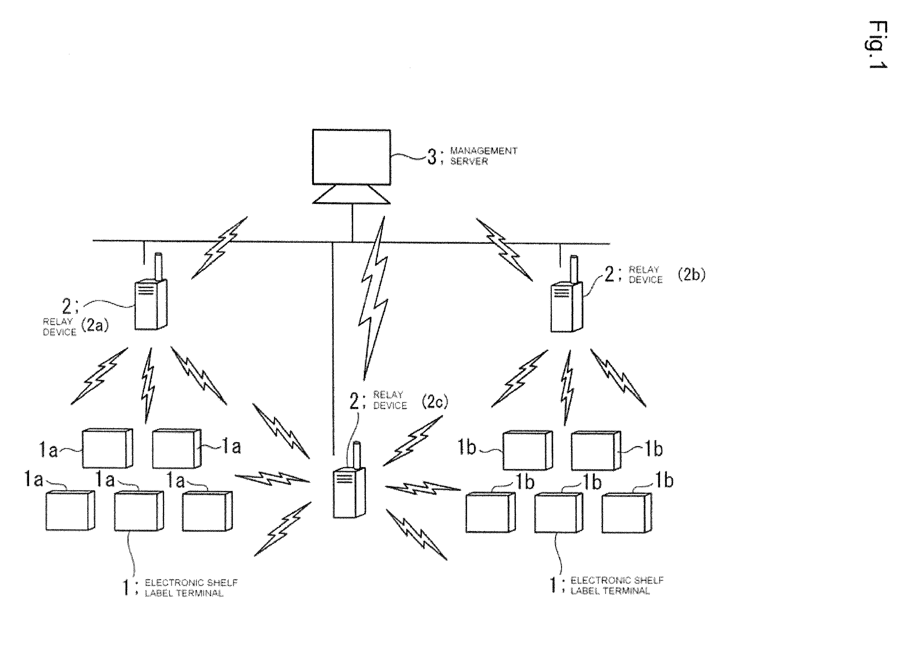

FIG. 1 is a block diagram illustrating a configuration of an electronic shelf label system according to this embodiment.
Referring to FIG. 1, the electronic shelf label system to be introduced into a store such as a supermarket includes a plurality of electronic shelf label terminals 1, a plurality of relay devices 2, and a management server 3. Each relay device 2 and the management server 3 are connected to each other via a wireless or wired communication network such as a local area network (LAN). Further, each relay device 2 and each electronic shelf label terminal 1 establish wireless connection therebetween via, for example, a wireless personal area network (WPAN) conforming to the IEEE 802.15.4.

The electronic shelf label terminal 1 is a terminal for displaying display information (product name, price, etc.) received from the management server 3 via the relay device 2, and is installed on a shelf in accordance with a product corresponding thereto. The relay device 2 is a relay station for relaying communication between the management server 3 and the electronic shelf label terminal 1, and is installed in the store. The management server 3 is a server device for managing the electronic shelf label system, and transmits the display information to the electronic shelf label terminal 1 via the relay device 2.

In this embodiment, in consideration of a case where the electronic shelf label systems are introduced into a plurality of neighboring stores (for example, store A and store B), the electronic shelf label terminals 1 and the relay devices 2 are divided into groups in accordance with the stores in which the electronic shelf label terminals 1 and the relay devices 2 are to be installed (for example, it is assumed that the group of the electronic shelf label terminals 1 and the relay devices 2 to be installed in the store A is assigned a group number 1, and the group of the electronic shelf label terminals 1 and the relay devices 2 to be installed in the store B is assigned a group number 2). Then, wireless communication is performed between the electronic shelf label terminals 1 and the relay devices 2 by using different channels (frequencies) in the respective groups. In this manner, for example, data transmitted from the relay device 2 installed in the store A is prevented from being received by the electronic shelf label terminal 1 installed in the store B.

Hereinbelow, for convenience of the description, three relay devices 2 are assigned symbols "a" to "c", and hence referred to as relay devices "2a", "2b", and "2c", respectively. Note that, the symbols "a" to "c" are omitted with regard to matters common to the respective relay devices 2a to 2c, and hence the relay devices in this case are referred to simply as "relay device 2" or "respective relay devices 2". Further, the electronic shelf label terminals 1 are divided into two groups, and the electronic shelf label terminals 1 communicating to the relay device 2a are assigned a symbol "a", while the electronic shelf label terminals 1 communicating to the relay device 2b are assigned a symbol "b". Hence, the electronic shelf label terminals in the respective groups are referred to as electronic shelf label terminals "1a" and "1b", respectively. Note that, the symbols "a" and "b" are omitted with regard to matters common to the respective electronic shelf label terminals 1a and 1b, and hence the electronic shelf label terminals in this case are referred to simply as "electronic shelf label terminal 1" or "respective electronic shelf label terminals 1 ".

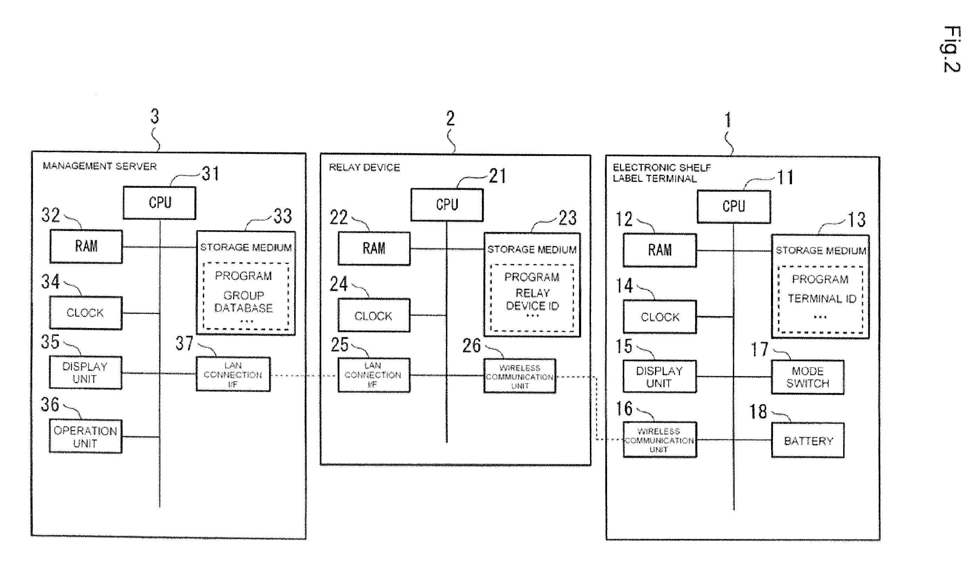

FIG. 2 is a block diagram illustrating hardware configurations of the electronic shelf label terminal 1, the relay device 2, and the management server 3 according to this embodiment.
As illustrated in FIG. 2, the electronic shelf label terminal 1 includes a CPU 11, a RAM 12, a storage medium 13, a clock 14, a display unit 15, a wireless communication unit 16, a mode switch 17, and a battery 18. The CPU 11, the RAM 12, the storage medium 13, the clock 14, the display unit 15, the wireless communication unit 16, and the mode switch 17 are connected via a bus, and hence mutually communicable to one another.

The CPU 11 is a central processing unit, which reads and executes a program stored in the storage medium 13, to thereby control an operation of the electronic shelf label terminal 1. The storage medium 13 is a semiconductor memory, which stores the program to be executed by the CPU 11, a terminal ID for identifying the electronic shelf label terminal 1, and the like. The RAM 12 is a random access memory, which stores a terminal-accessible relay device list described later, and the like. The clock 14 keeps time and provides time data to the CPU 11. The display unit 15 is constituted by a liquid crystal display (LCD) and a light emitting diode (LED), and displays information on the relay devices 2 accessible from the electronic shelf label terminal 1 for communication to the management server 3, and display information (product name, price, etc.). The terminal-accessible relay device 2 herein refers to a relay device 2 which is communicable by wireless to the electronic shelf label terminal 1 and is included in the group to which the electronic shelf label terminal 1 belongs. The relay device 2 communicable by wireless refers to a relay device 2 which has transmitted to the electronic shelf label terminal 1 a radio wave having a field intensity of a predetermined value or more. Further, the information on the terminal-accessible relay device 2 refers to, for example, the number of terminal-accessible relay devices 2, identification information thereof, the field intensities thereof, and the like. The wireless communication unit 16 performs wireless communication to the relay devices 2. The mode switch 17 is a switch for starting search for the terminal-accessible relay devices 2. The battery 18 supplies power to be used for operating the respective units of the electronic shelf label terminal 1.

Further, the relay device 2 includes a CPU 21, a RAM 22, a storage medium 23, a clock 24, a LAN connection interface (I/F) 25, and a wireless communication unit 26. The CPU 21, the RAM 22, the storage medium 23, the clock 24, the LAN connection I/F 25, and the wireless communication unit 26 are connected via a bus, and hence mutually communicable to one another. The CPU 21 is a central processing unit, which reads and executes a program stored in the storage medium 23, to thereby control an operation of the relay device 2. The storage medium 23 is a semiconductor memory, which stores the program to be executed by the CPU 21, a relay device ID (identification information) for identifying the relay device 2, and the like. The RAM 22 is a random access memory. The clock 24 keeps time and provides time data to the CPU 21. The LAN connection I/F 25 communicates to the management server 3 via a LAN. The wireless communication unit 26 performs wireless communication to the electronic shelf label terminal 1.

Further, the management server 3 includes a CPU 31, a RAM 32, a storage medium 33, a clock 34, a display unit 35, an operation unit 36, and a LAN connection I/F 37. The CPU 31, the RAM 32, the storage medium 33, the clock 34, the display unit 35, the operation unit 36, and the LAN connection I/F 37 are connected via a bus, and hence mutually communicable to one another. The CPU 31 is a central processing unit, which reads and executes a program stored in the storage medium 33, to thereby control an operation of the management server 3. The storage medium 33 is a semiconductor memory, which stores the program to be executed by the CPU 31, a group database, and the like. The group database is a list of the electronic shelf label terminals 1 and the relay devices 2 belonging to the respective groups. The RAM 32 is a random access memory. The clock 34 keeps time and provides time data to the CPU 31. The display unit 35 is a display device such as a liquid crystal display and a cathode ray tube (CRT) display. The operation unit 36 is an input device such as a keyboard and a mouse. The LAN connection I/F 37 communicates to the relay device 2 via a LAN.

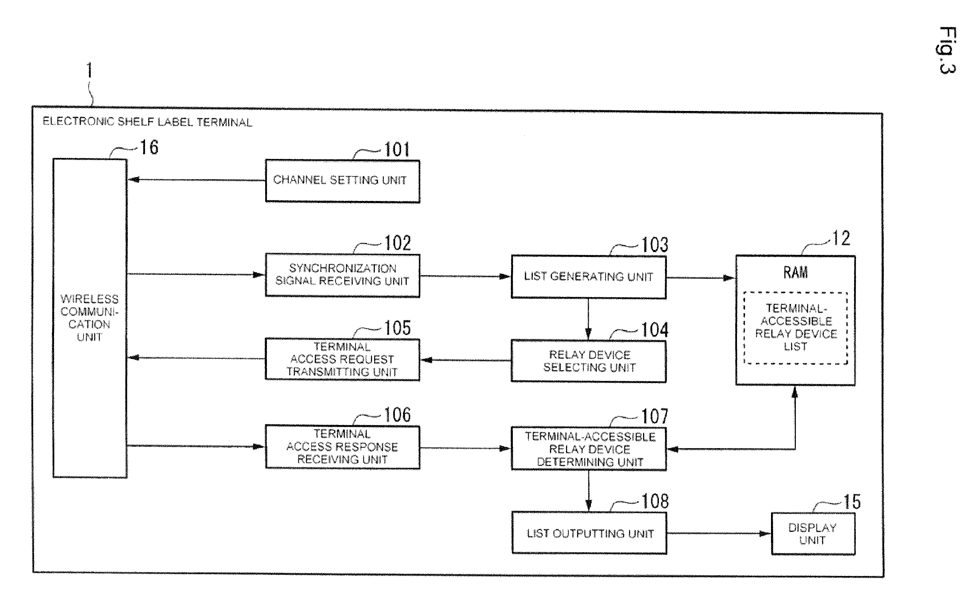

FIG. 3 is a block diagram illustrating a functional configuration of the electronic shelf label terminal 1 according to this embodiment.
As illustrated in FIG. 3, the electronic shelf label terminal 1 includes a channel setting unit 101, a synchronization signal receiving unit 102, a list generating unit 103, a relay device selecting unit 104, a terminal access request transmitting unit 105, a terminal access response receiving unit 106, a terminal-accessible relay device determining unit 107, and a list outputting unit 108.

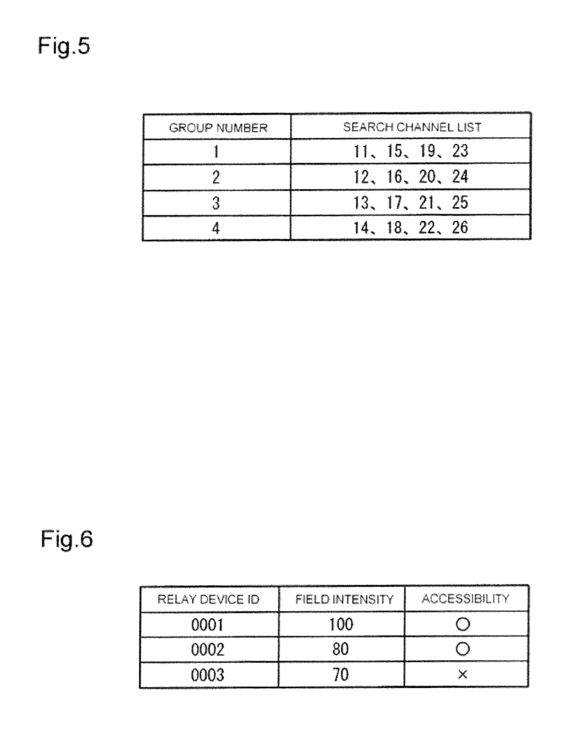

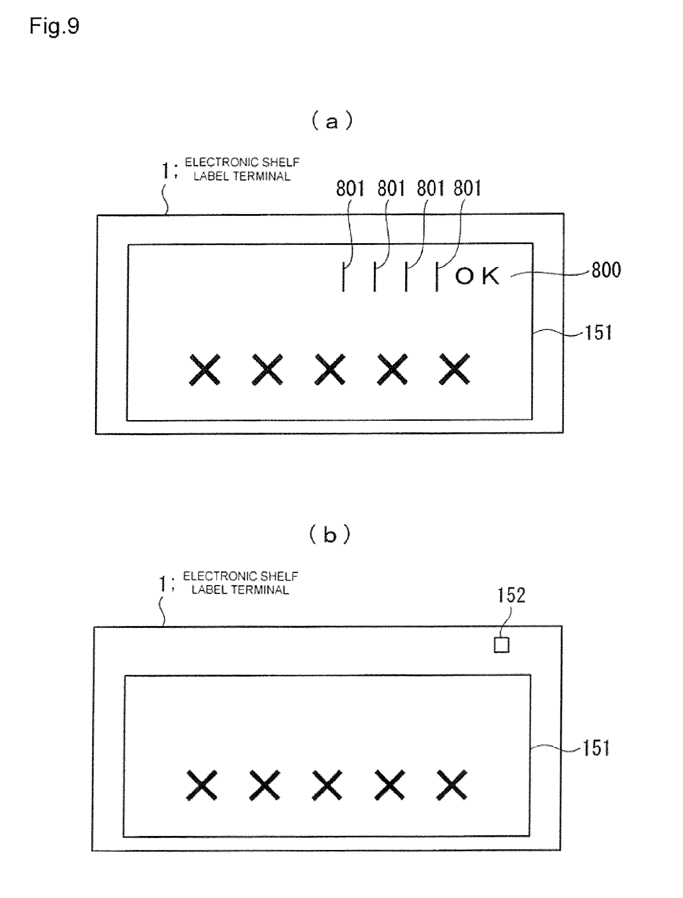

The channel setting unit 101 (switching unit) sets a channel to be used by the wireless communication unit 16 for wireless communication. Further, when the synchronization signal receiving unit 102 does not receive synchronization signals from the relay devices 2 for a predetermined period of time or more, the channel setting unit 101 refers to a search channel list described later (FIG. 5), and switches the channel to be used for receiving the synchronization signals.
The synchronization signal receiving unit 102 (reception unit) receives the synchronization signals (radio waves) from the plurality of relay devices 2 via the wireless communication unit 16. The synchronization signal is a signal to be used for synchronization between the relay device 2 and the electronic shelf label terminal 1, and includes the relay device ID.
The list generating unit 103 generates a list of relay devices 2 that have transmitted the synchronization signals received by the synchronization signal receiving unit 102.
The relay device selecting unit 104 selects a relay device 2 which has transmitted a synchronization signal having a field intensity of a predetermined value or more from the list generated by the list generating unit 103.
The terminal access request transmitting unit 105 transmits terminal access request data via the wireless communication unit 16 to the relay device 2 selected by the relay device selecting unit 104. The terminal access request data is data for requesting access from the electronic shelf label terminal itself to the communication to be performed via the relay device 2 to the management server 3, and includes the terminal ID.
The terminal access response receiving unit 106 receives via the wireless communication unit 16 terminal access response data that is a response to the terminal access request data transmitted by the terminal access request transmitting unit 105.
The terminal-accessible relay device determining unit 107 (determination unit) determines terminal-accessible relay devices 2 based on whether or not the terminal access response receiving unit 106 has received the terminal access response data.
The list outputting unit 108 displays on the display unit 15 information on the terminal-accessible relay devices 2 determined by the terminal-accessible relay device determining unit 107. At this time, the list outputting unit 108 (calculation unit) calculates the number of terminal-accessible relay devices 2 based on the relay device IDs, and displays information indicating the calculated number of relay devices 2 on the display unit 15 (see FIGS. 9).

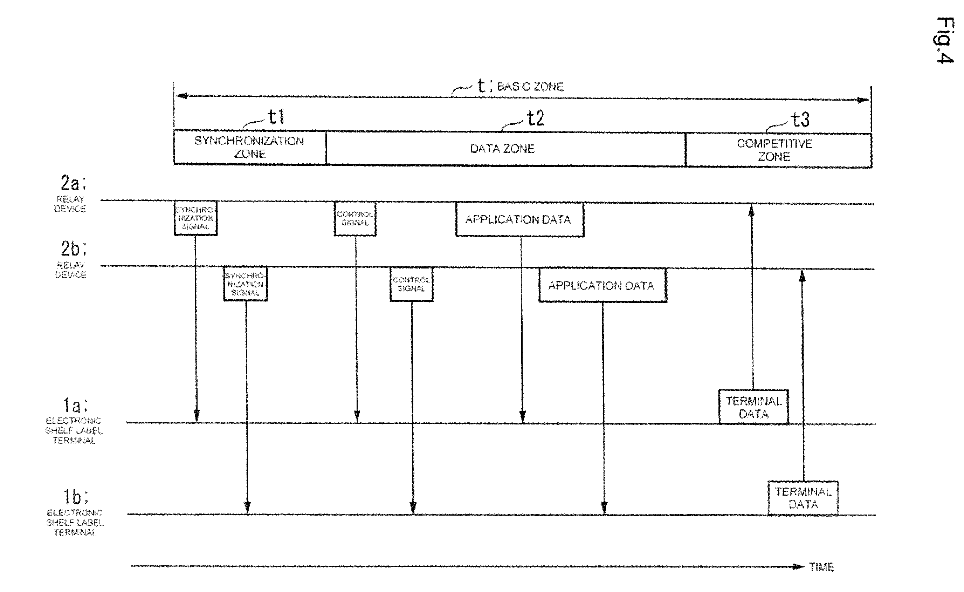

FIG. 4 is a sequence diagram illustrating operations of data transmission/reception processing performed between the relay device 2 and the electronic shelf label terminal 1 according to this embodiment.
In FIG. 4, the axis of abscissa represents time. As illustrated in FIG. 4, a basic zone t (for example, 30 seconds) that is a predetermined period of time is constituted by three time zones, namely, a synchronization zone t1 (for example, 3 seconds), a data zone t2, and a competitive zone t3. In this case, t=t1+t2+t3. The synchronization zone is a time zone in which the synchronization signal is transmitted from the relay device 2 to the electronic shelf label terminal 1. In the synchronization zone, the relay device 2 transmits the synchronization signal through broadcast transmission. The electronic shelf label terminal 1 can be synchronized with the relay device 2 by receiving the synchronization signal. The data zone is a time zone in which a control signal and application data are transmitted from the relay device 2 to the electronic shelf label terminal 1. The application data is data addressed from the management server 3 to each electronic shelf label terminal 1, and is, for example, the display information and the terminal access response data. Further, the control signal is a signal indicating which electronic shelf label terminal 1 the application data is addressed to, and indicating the terminal ID. In the data zone, the relay device 2 first transmits the control signal and then transmits the application data. The electronic shelf label terminal 1 determines based on the received control signal whether or not the application data to be transmitted next from the relay device 2 is addressed to the own electronic shelf label terminal 1. The competitive zone is a time zone in which terminal data such as the terminal access request data is transmitted from the electronic shelf label terminal 1 to the relay device 2. In the competitive zone, the relay device 2 does not transmit data but receives the terminal data from the electronic shelf label terminal 1. In the competitive zone, the electronic shelf label terminal 1 transmits the terminal data to the relay device 2.

FIG. 5 is a schematic diagram illustrating a structure and example of data in a search channel table stored in the storage medium 13 (storage unit) of the electronic shelf label terminal 1 according to this embodiment. The search channel table is data in a two-dimensional table format constituted by rows and columns, and contains columns of items of "group number" and "search channel list". Note that, the data stored in the search channel table is set in advance and stored in the storage medium 13. The group number is a number for identifying a group. The search channel list is a list of channels to be used for wireless communication between the electronic shelf label terminal 1 and the relay device 2 in each group. In the example of FIG. 5, the electronic shelf label terminal 1 of a group number 1 sequentially searches channels of numbers "11 ", "15", "19", and "23", and performs wireless communication by using a channel of a number with which the relay devices 2 are retrieved as a search result. Further, the electronic shelf label terminal 1 of a group number 2 sequentially searches channels of numbers "12", "16", "20", and "24", and performs wireless communication by using a channel of a number with which the relay devices 2 are retrieved as a search result. Further, the electronic shelf label terminal 1 of a group number 3 sequentially searches channels of numbers "13", "17", "21", and "25", and performs wireless communication by using a channel of a number with which the relay devices 2 are retrieved as a search result. Further, the electronic shelf label terminal 1 of a group number 4 sequentially searches channels of numbers "14", "18", "22", and "26", and performs wireless communication by using a channel of a number with which the relay devices 2 are retrieved as a search result. Note that, the respective electronic shelf label terminals 1 have the group numbers set in advance.

FIG. 6 is a schematic diagram illustrating a structure and example of data in the terminal-accessible relay device list generated by the list generating unit 103 of the electronic shelf label terminal 1 according to this embodiment. As illustrated in FIG. 6, the terminal-accessible relay device list is data in a two-dimensional table format constituted by rows and columns, and contains columns of items of "relay device ID", "field intensity", and "accessibility". The relay device ID indicates the relay device ID contained in the synchronization signal that is received in the synchronization zone. The field intensity is a relative value assuming as a range of the field intensity of the synchronization signal that the maximum value is "100" and the minimum value is "0". The synchronization signal receiving unit 102 measures the field intensities of the received synchronization signals, and the list generating unit 103 writes the measured field intensities in the field intensity field. The accessibility indicates whether or not the relay device is a terminal-accessible relay device, and the symbol "○" indicates that the relay device is a terminal-accessible relay device, while the symbol "×" indicates that the relay device is a terminal-inaccessible relay device. The terminal-accessible relay device determining unit 107 determines whether or not the relay devices are terminal-accessible relay device, and writes a result of the determination in the accessibility field. In the example of FIG. 6, the field intensity of a relay device having a relay device ID "0001" is "100", and the accessibility thereof is "○". Further, the field intensity of a relay device having a relay device ID "0002" is "80", and the accessibility thereof is "○". Further, the field intensity of a relay device having a relay device ID "0003" is "70", and the accessibility thereof is "×".

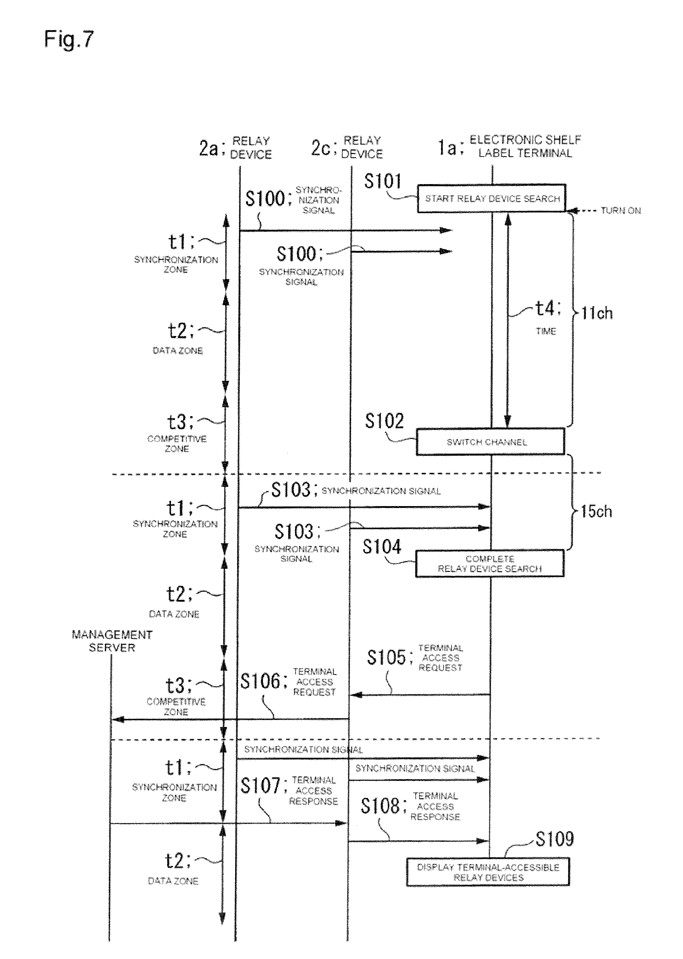

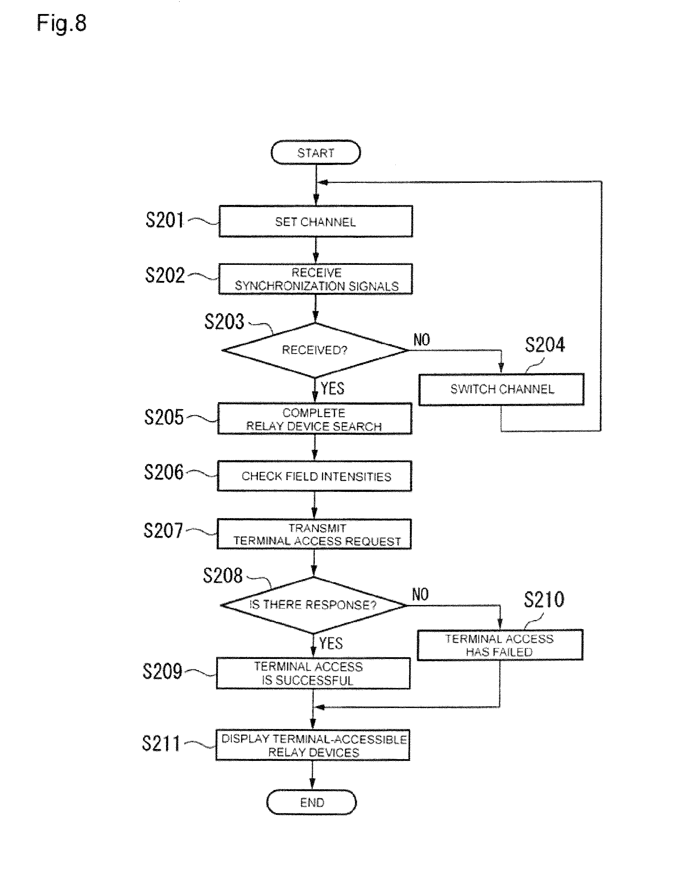

Next, referring to FIGS. 7 and 8, terminal-accessible relay device display processing performed by the electronic shelf label terminal 1 is described. FIG. 7 is a sequence diagram illustrating operations of the terminal-accessible relay device display processing according to this embodiment. Note that, the channel to be used by the relay devices 2 for wireless communication is set in advance, and in the example of FIG. 7, the relay devices 2a and 2c perform wireless communication by using a 15ch.

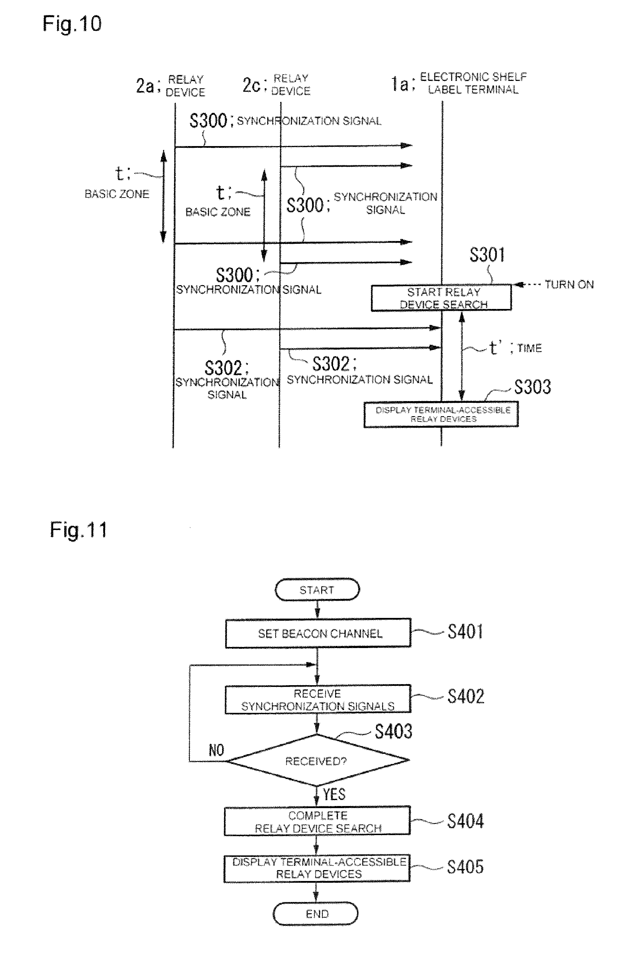

The relay devices 2 perform broadcast transmission to transmit the synchronization signals at particular timings in the synchronization zone (Step S100). Specifically, the relay devices 2 transmit the synchronization signals every t seconds, that is, in each basic zone. Further, in order to prevent interference, the relay devices 2 transmit the synchronization signals at transmission timings different among the respective relay devices 2. When the mode switch 17 is turned ON, the electronic shelf label terminal 1a first acquires a search channel list corresponding to the own group (in this example, group number 1) from the search channel table. Then, the electronic shelf label terminal 1a starts relay device search on a channel at the top (in the example of FIG. 7, 11ch) stored in the acquired search channel list (Step S101). The relay device search refers to processing of receiving the synchronization signals through wireless communication. Because the relay devices 2 and the electronic shelf label terminal 1a perform wireless communication by using the different channels, respectively, the electronic shelf label terminal 1a cannot receive the synchronization signals transmitted from the relay devices 2a and 2c. When the electronic shelf label terminal 1a cannot receive the synchronization signals even though a period of time t4 which is the same as the basic zone t has elapsed since the start of the relay device search, the electronic shelf label terminal 1 a switches the channel to be subjected to the relay device search (Step S102). Specifically, the electronic shelf label terminal 1a acquires from the search channel list a channel (in the example of FIG. 7, 15ch) next to the channel currently subjected to the relay device search, and performs the relay device search on the acquired channel. Note that, in this embodiment, the electronic shelf label terminal 1a switches the channel if the period of time t4 which is the same as the basic zone t has elapsed since the start of the relay device search, but the period of time t4 may be different from the basic zone t and may be any period of time which allows the relay device search to be performed sequentially on all the channels within one group through the repetition in the respective basic zones t. Because the relay devices 2a and 2c operate by using the 15ch, the electronic shelf label terminal 1a sequentially receives the synchronization signals transmitted from the relay devices 2a and 2c (Step S103). When the electronic shelf label terminal 1a receives the synchronization signals, the electronic shelf label terminal 1a completes the relay device search (Step S104). At this time, the list generating unit 103 of the electronic shelf label terminal 1a stores in the terminal-accessible relay device list the relay device IDs and the field intensities contained in the received synchronization signals.

Then, the electronic shelf label terminal 1a transmits in the competitive zone terminal access request data to the relay device 2 which has transmitted the synchronization signal having the highest field intensity (in the example of FIG. 7, relay device 2c) (Step S105). The relay device 2c transfers the received terminal access request data to the management server 3 (Step S106). When the management server 3 receives the terminal access request data, the management server 3 determines whether or not the electronic shelf label terminal 1a is accessible. Specifically, the management server 3 refers to the group database, and when the relay device 2c and the electronic shelf label terminal 1a belong to the same group, the management server 3 determines that the electronic shelf label terminal 1a is accessible. On the other hand, when the electronic shelf label terminal 1a is not registered in the group database or when the relay device 2c and the electronic shelf label terminal 1a belong to different groups, the management server 3 determines that the electronic shelf label terminal 1a is inaccessible. When the electronic shelf label terminal 1a is accessible, the management server 3 transmits terminal access response data to the relay device 2c (Step S107). On the other hand, when the electronic shelf label terminal 1a is inaccessible, the management server 3 does not transmit the terminal access response data. The relay device 2c transfers in the data zone the received terminal access response data to the electronic shelf label terminal 1a (Step S108). When the electronic shelf label terminal 1a receives the terminal access response data, the electronic shelf label terminal 1a updates the accessibility field in the terminal-accessible relay device list which corresponds to the relay devices 2a and 2c to "○". Then, the electronic shelf label terminal 1a displays on the display unit 15 information on the relay devices 2 whose accessibility field in the terminal-accessible relay device list is "○" (Step S109).

Note that, in this embodiment, the management server 3 does not return the terminal access response data when the electronic shelf label terminal 1 is inaccessible, but may transmit to the electronic shelf label terminal 1, for example, terminal access denial response data for notifying that the electronic shelf label terminal 1 is inaccessible.

FIG. 8 is a flow chart illustrating procedures of the terminal-accessible relay device display processing performed by the electronic shelf label terminal 1 according to this embodiment.
First, in Step S201, the channel setting unit 101 sets a channel to be subjected to the relay device search. Specifically, the channel setting unit 101 acquires the search channel list corresponding to the own group from the search channel table, and then notifies the wireless communication unit 16 of the channel at the top in the acquired search channel list. The wireless communication unit 16 performs wireless communication by using the notified channel.
Then, in Step S202, the synchronization signal receiving unit 102 performs the processing of receiving the synchronization signals from the relay devices 2 (relay device search) until the period of time t4 elapses.
Then, in Step S203, the synchronization signal receiving unit 102 determines whether or not the synchronization signals have been received from the relay devices 2 in Step S202. When the synchronization signals have been received, the processing proceeds to Step S205. On the other hand, when the synchronization signals have not been received, the processing proceeds to Step S204.
In Step S204, the channel setting unit 101 switches the channel to be subjected to the relay device search. Specifically, the channel setting unit 101 acquires from the search channel list the channel next to the channel currently subjected to the relay device search, and notifies the wireless communication unit 16 of the acquired channel. The wireless communication unit 16 performs wireless communication by using the notified channel. Note that, when the channel next to the current channel is not found in the search channel list, the channel setting unit 101 sets the channel at the top in the search channel list.

On the other hand, in Step S205, the synchronization signal receiving unit 102 completes the relay device search. At this time, the list generating unit 103 stores in the terminal-accessible relay device list the relay device IDs and the field intensities contained in the received synchronization signals.
Then, in Step S206, the relay device selecting unit 104 checks the field intensities in the terminal-accessible relay device list, and selects the relay device 2 exhibiting the highest field intensity.
Then, in Step S207, the terminal access request transmitting unit 105 transmits the terminal access request data to the relay device 2 selected in Step S206.

Then, in Step S208, the terminal access response receiving unit 106 determines whether or not the terminal access response data as a response to the transmitted terminal access request data has been received. When the terminal access response data has been received, the processing proceeds to Step S209. On the other hand, when the terminal access response data has not been received, the processing proceeds to Step S210.
In Step S209, the terminal-accessible relay device determining unit 107 determines that the terminal access is successful, and determines the relay devices 2 which perform wireless communication by using the same channel as the relay device 2 selected in Step S206, as terminal-accessible relay devices 2. Then, the terminal-accessible relay device determining unit 107 updates the accessibility field in the terminal-accessible relay device list which corresponds to the relay devices 2 determined to be accessible, to "○".
On the other hand, in Step S210, the terminal-accessible relay device determining unit 107 determines that the terminal access has failed, and determines the relay devices 2 which perform wireless communication by using the same channel as the relay device 2 selected in Step S206, as terminal-inaccessible relay devices 2. Then, the terminal-accessible relay device determining unit 107 updates the accessibility field in the terminal-accessible relay device list which corresponds to the relay devices 2 determined to be inaccessible, to "×".
Then, in Step S211, the list outputting unit 108 displays on the display unit 15 the information on the relay devices 2 whose accessibility field in the terminal-accessible relay device list is "○".

Note that, when the synchronization signals cannot be received even though the predetermined period of time or more has elapsed since the start of the relay device search (or even though the channel switching has been performed a predetermined number of times or more), the terminal-accessible relay device determining unit 107 determines that there is no terminal-accessible relay device 2. In this case, the list outputting unit 108 displays on the display unit 15 a notification that there is no terminal-accessible relay device 2.
Further, in this embodiment, the electronic shelf label terminal 1 determines the relay devices 2 which perform wireless communication by using the same channel as the relay device 2 that has transferred the terminal access response data, as the terminal-accessible relay devices 2, but may determine the terminal-accessible relay devices 2 in the following manner. For example, the relay device IDs are contained in the terminal access response data, and the relay devices 2 corresponding to the relay device IDs contained in the terminal access response data are determined as the terminal-accessible relay devices 2.

FIGS. 9 are display examples of the information on the relay devices 2, which is displayed on the display unit 15 of the electronic shelf label terminal 1 according to this embodiment.
FIG. 9(a) is a display example of the information on the relay devices 2. The list outputting unit 108 calculates the number of relay devices 2 whose accessible field in the accessible list is "○", and displays information 800 on the relay devices 2 on the display unit 15. In the information 800 on the relay devices 2 displayed on a LCD 151 of the display unit 15, vertical bars 801 indicate the number of terminal-accessible relay devices 2 in correspondence with the number of vertical bars 801 themselves. In the example of FIG. 9(a), the number of terminal-accessible relay devices 2 is four. Further, when there is no terminal-accessible relay device 2 (zero), the list outputting unit 108 displays, for example, a symbol "NG" on the LCD 151 of the display unit 15.
FIG. 9(b) is another display example of the information on the relay devices 2. The list outputting unit 108 turns on LEDs 152 of three colors of red, orange, and green of the display unit 15 to indicate the number of terminal-accessible relay devices 2. For example, the green LED 152 is turned on when the number of terminal-accessible relay devices 2 is two or more; the orange LED 152 when the number of terminal-accessible relay devices 2 is one; and the red LED 152 when the number of term inal-accessible relay devices 2 is zero.
Note that, in this embodiment, the list outputting unit 108 displays the number of terminal-accessible relay devices 2, but may display on the display unit 15, for example, the relay device IDs and the field intensities of the respective relay devices 2.

With such display as described above, an appropriate installation position of the electronic shelf label terminal 1 can be suggested to a person in charge of installing the electronic shelf label terminal 1, and the installation can be prompted.
Note that, in this embodiment, the electronic shelf label terminal 1 displays the information on the relay devices 2 after the terminal access becomes successful in Step S209 of FIG. 8, but may display also after Step S205 information on the relay devices 2 whose relay device IDs and field intensities are stored in the terminal-accessible relay device list in S205 (namely, relay devices 2 communicable by wireless). In this manner, the person in charge can check the signal quality of the electronic shelf label terminal 1 at a current position in a shorter period of time if the person is not particularly concerned with the accessibility. Thus, the person in charge can finely adjust the installation position of the electronic shelf label terminal 1 as well while checking the signal quality.

As described above, according to this embodiment, the electronic shelf label terminal 1 performs the relay device search, and displays the information on the terminal-accessible relay devices 2, with the result that the person in charge of installing the electronic shelf label terminal 1 can easily check the installation place with good signal quality without using any dedicated device or the like. In other words, the person in charge only needs to carry the electronic shelf label terminal 1 when installing the electronic shelf label terminal 1, and hence there is no need to carry the dedicated device or other devices. Further, when the mode switch 17 is depressed, the information on the terminal-accessible relay devices 2 is displayed on the electronic shelf label terminal 1, and hence the person in charge can grasp the information on the relay devices 2 currently accessible from the electronic shelf label terminal 1 through a simple operation. Further, the person in charge can easily grasp an area in the store which the radio wave does not reach from any relay device 2, without using the dedicated device or the like, and hence the person can reinstall the relay devices 2 in appropriate places so that the radio waves can reach all the areas in the store.
Further, the electronic shelf label terminal 1 determines the terminal-accessible relay devices 2 by using the terminal access request data. Hence, for example, even when the radio waves are received from a relay station and a base station other than the relay devices 2 of the electronic shelf label system, the electronic shelf label terminal 1 does not determine those relay station and base station as the terminal-accessible relay devices 2.
Further, the electronic shelf label terminal 1 switches the channel to be subjected to the relay device search, and hence there is no need to fix the channel of the electronic shelf label terminal 1 in advance. Thus, for example, even when any particular channel is unavailable, the electronic shelf label terminal 1 can perform wireless communication to the relay device 2 without resetting the channel.
Further, it generally takes about several minutes to perform the relay device search on all the channels, which requires a long period of time to display the information on the terminal-accessible relay devices 2. In this embodiment, however, the electronic shelf label terminal 1 switches the channel to be subjected to the relay device search by using the search channel list, and hence the electronic shelf label terminal 1 can display the information on the terminal-accessible relay devices 2 in a relatively short period of time, avoiding searching all the channels.

### [Second embodiment]

Next, an electronic shelf label system according to a second embodiment of the present invention is described.
In the first embodiment, the channel to be subjected to the relay device search is switched, whereas in this embodiment, the electronic shelf label terminal 1 performs the relay device search on a single channel. Further, in this embodiment, the channel is fixed, which means that the group to which the electronic shelf label terminal 1 belongs is determined in advance. Therefore, the electronic shelf label terminal 1 does not transmit the access request. In this case, the electronic shelf label terminal 1 determines the relay devices 2 communicable by wireless as the terminal-accessible relay devices 2, and displays the information on the terminal-accessible relay devices 2.

FIG. 10 is a sequence diagram illustrating operations of terminal-accessible relay device display processing according to this embodiment. In this embodiment, the relay devices 2a and 2c, and the electronic shelf label terminal 1a perform wireless communication by using the same channel.
The relay devices 2 perform broadcast transmission to transmit the synchronization signals at particular timings in the synchronization zone (Step S300). Specifically, the relay devices 2 transmit the synchronization signals every t seconds, that is, in each basic zone. Further, in order to prevent interference, the relay devices 2 transmit the synchronization signals at transmission timings different among the respective relay devices 2. When the mode switch 17 is turned ON, the electronic shelf label terminal 1a starts the relay device search (Step S301). Because the relay devices 2 and the electronic shelf label terminal 1 a perform wireless communication by using the same channel, the electronic shelf label terminal 1a receives the synchronization signals transmitted from the relay devices 2a and 2c (Step S302). When a predetermined period of time, that is, t' seconds has elapsed since the start of the relay device search, the electronic shelf label terminal 1a determines the relay devices 2a and 2c that have transmitted the received synchronization signals as the terminal-accessible relay devices 2, and displays on the display unit 15 the information on the terminal-accessible relay devices 2 (Step S303).

FIG. 11 is a flow chart illustrating procedures of the terminal-accessible relay device display processing performed by the electronic shelf label terminal 1 according to this embodiment.
First, in Step S401, the channel setting unit 101 sets a channel (beacon channel) to be subjected to the relay device search. Specifically, the channel setting unit 101 notifies the wireless communication unit 16 of the channel set in advance. The wireless communication unit 16 performs wireless communication by using the notified channel.
Then, in Step S402, the synchronization signal receiving unit 102 performs the processing of receiving the synchronization signals from the relay devices 2 (relay device search) for the predetermined period of time (t' seconds).
Then, in Step S403, the synchronization signal receiving unit 102 determines whether or not the synchronization signals have been received from the relay devices 2 in Step S402. When the synchronization signals have been received, the processing proceeds to Step S404. On the other hand, when the synchronization signals have not been received, the processing returns to Step S402.

Then, in Step S404, the synchronization signal receiving unit 102 completes the relay device search. At this time, the list generating unit 103 stores in the terminal-accessible relay device list the relay device IDs and the field intensities contained in the received synchronization signals. Further, the terminal-accessible relay device determining unit 107 determines the relay devices 2 stored in the accessible list as the terminal-accessible relay devices 2. In other words, the terminal-accessible relay device determining unit 107 determines the relay devices 2 that have transmitted the received synchronization signals as the terminal-accessible relay devices 2.
Then, in Step S405, the list outputting unit 108 displays on the display unit 15 the information on the relay devices 2 stored in the terminal-accessible relay device list.
Note that, when the synchronization signals cannot be received even though the predetermined period of time or more has elapsed since the start of the relay device search, the terminal-accessible relay device determining unit 107 determines that there is no terminal-accessible relay device 2. In this case, the list outputting unit 108 displays on the display unit 15 a notification that there is no terminal-accessible relay device 2.
Further, other components of this embodiment are the same as those of the first embodiment, and description thereof is therefore omitted herein.

As described above, according to this embodiment, the electronic shelf label terminal 1 performs the relay device search only on the single fixed channel, and hence the electronic shelf label terminal 1 can display on the display unit 15 the information on the relay devices 2 in a relatively short period of time.

Hereinabove, the embodiments of the present invention have been described in detail with reference to the drawings, but specific configurations thereof are not limited to those described above, and various design variations and the like may be made without departing from the gist of the present invention.
For example, the channel is defined as the frequency in this embodiment, but the channel may be divided in the scheme of, for example, time division or code division.

Further, in this embodiment, the information on the number of relay devices 2 and the field intensities are displayed as the information on the terminal-accessible relay devices 2. Alternatively, when the number of terminal-accessible relay devices 2 is a predetermined value or more, there may be performed an instruction and notification to prompt the person in charge to duly install the electronic shelf label terminal 1 at the current position, assuming that the current position is an appropriate installation position for the electronic shelf label terminal 1. For example, in the display regarding the number of terminal-accessible relay devices 2 as illustrated in FIG. 9(a), when the number is a predetermined value or more, the display may be highlighted, and symbols and letters for instructing the installation at the current position may be displayed. Alternatively, in place of the display regarding the number of terminal-accessible relay devices 2, only the symbols and letters for instructing the installation at the current position may be displayed. Further, for example, in the case of the LEDs of FIG. 9(b), when the number of terminal-accessible relay devices 2 is a predetermined value or more, an LED of a color different from those in the other cases may be turned on.
In general, in consideration of reliability of communicative connection to the relay devices 2, the electronic shelf label terminal 1 may be installed at a position where the number of terminal-accessible relay devices 2 is a predetermined value or more. Therefore, by displaying the number of terminal-accessible relay devices 2, the IDs thereof, the field intensities thereof, and the like, an appropriate installation place of the electronic shelf label terminal 1 is suggested and the installation is prompted, or there is performed an instruction and notification to prompt the person in charge to duly install the electronic shelf label terminal 1 at the current position. As a result, it is possible to reduce the load on the person in charge in the installation work of the electronic shelf label terminal 1.

Further, in this embodiment, the terminal-accessible relay devices 2 are displayed when the mode switch 17 is depressed, but the terminal-accessible relay devices 2 may be displayed by the electronic shelf label terminal 1 performing the relay device search at a predetermined timing or in response to an instruction from the management server 3 or other devices. In this manner, even when the installation position of the electronic shelf label terminal 1 is not optimum by the fact that the installation position of the electronic shelf label terminal 1 is changed unintendedly or that the signal quality is changed by another factor independent of the installation position of the electronic shelf label terminal 1, the status of the radio wave is displayed and thus reinstallation can be prompted. This also produces the effect of reducing the work load on the person in charge who reinstalls the electronic shelf label terminal 1.

### Industrial Applicability

The present invention is applicable to an electronic shelf label terminal that displays a product name, price, and the like, and to an electronic shelf label system for installing the electronic shelf label terminal in an installation place with good signal quality.

### Reference Signs List

- 1: electronic shelf label terminal
- 2: relay device
- 3: management server
- 11, 21, 31: CPU
- 12, 22, 32: RAM 13, 23, 33...storage medium
- 14, 24, 34: clock
- 15, 35: display unit
- 16, 26: wireless communication unit
- 17: mode switch
- 18: battery
- 25, 37: LAN connection I/F
- 36: operation unit
- 101: channel setting unit
- 102: synchronization signal receiving unit
- 103: list generating unit
- 104: relay device selecting unit
- 105: terminal access request transmitting unit
- 106: terminal access response receiving unit
- 107: terminal-accessible relay device determining unit
- 108: list outputting unit

## Claims

1. An electronic shelf label terminal that displays display information received from a management server via a relay device, comprising:
a reception unit for receiving radio waves from a plurality of the relay devices; and
a display unit for displaying information on the relay devices accessible from the electronic shelf label terminal for communication to the management server, based on field intensities of the radio waves received by the reception unit.

2. An electronic shelf label terminal according to claim 1, further comprising:
a terminal access request transmitting unit for transmitting, to the relay device, a terminal access request for requesting access from the electronic shelf label terminal to the communication to be performed via the relay device to the management server;
a terminal access response receiving unit for receiving, from the relay device, a terminal access response that is a response to the terminal access request; and
a determination unit for determining terminal-accessible relay devices based on the terminal access response received by the terminal access response receiving unit,
wherein the display unit displays information on the terminal-accessible relay devices determined by the determination unit.

3. An electronic shelf label terminal according to claim 1 or 2, further comprising a calculation unit for calculating a number of the terminal-accessible relay devices determined by the determination unit,
wherein the display unit displays the number of the terminal-accessible relay devices calculated by the calculation unit.

4. An electronic shelf label terminal according to claim 1 or 2,
wherein the reception unit receives identification information of the relay devices from the plurality of the relay devices, and
wherein the display unit displays the identification information received by the reception unit.

5. An electronic shelf label terminal according to claim 2, further comprising a switching unit for switching a channel to be used for receiving the radio waves when the reception unit does not receive the radio waves from the relay devices for a predetermined period of time or more.

6. An electronic shelf label terminal according to claim 5, further comprising a storage unit for storing a list of the channels to be used for receiving the radio waves,
wherein the switching unit switches the channel to be used for receiving the radio waves by referring to the list stored in the storage unit.

7. An electronic shelf label system, comprising:
a management server; and
a plurality of electronic shelf label terminals that each display display information received from the management server via a relay device,
wherein each of the plurality of electronic shelf label terminals comprises:
a reception unit for receiving radio waves from a plurality of the relay devices; and
a display unit for displaying information on the relay devices accessible from the each of the plurality of electronic shelf label terminals for communication to the management server, based on field intensities of the radio waves received by the reception unit.

8. A display method for an electronic shelf label system comprising:
a management server; and
a plurality of electronic shelf label terminals that each display display information received from the management server via a relay device,
the display method comprising the steps of:
receiving, by each of the plurality of electronic shelf label terminals, radio waves from a plurality of the relay devices; and
displaying, by the each of the plurality of electronic shelf label terminals, information on the relay devices accessible from the each of the plurality of electronic shelf label terminals for communication to the management server, based on field intensities of the received radio waves.
